# EUROPEAN PATENT APPLICATION

(11) **EP 3 453 874 A1**
(43) Date of publication of application: **13.03.2019**
(21) Application number: 17190208.3
(22) Date of filing: 08.09.2017
(51) Int. Cl.: F03D 17/00, F03D 80/50

(54) **METHOD FOR ANALYSIS OF SENSOR DATA RELATED TO A WIND TURBINE**

(71) Applicant: Sulzer & Schmid Laboratories AG, 8618 Oetwil am See (CH)
(72) Inventor: Sulzer, Thomas, CH-8618 Oetwill am See (CH); Asikainen, Joonas, CH-8618 Oetwil am See (CH)
(74) Representative: Frei Patent Attorneys

(57) **Abstract**

A method for analysis of sensor data related to a wind turbine comprises the steps of
• retrieving a plurality of sets of enhanced sensor data (7), each comprising sensor data (71) stored in association with sensor pose data (74) that defines the pose of a sensor (42, 44) at the time at which the sensor data (71) was acquired;
• processing the plurality of sets of sensor data (71) in combination with the sensor pose data (74), thereby generating an integrated view on the sets of the enhanced sensor data (7).

## Description

The invention relates to the field of plant inspection, and in particular to a method for analysing sensor data related to a wind turbine.

The wind-energy sector is in need of new inspection methods that can capture and document the condition of power plants, i.e. turbines, over time. Turbine blades typically are made of fibre-reinforced composites, with resins such as polyester and epoxy, and with glass and carbon fibres as the reinforcing material. Defects of the blades can be caused by the impact of objects, lightning, erosion by rain and hail, mechanical stress and flexing, aging, etc. Owners and operators should obtain full transparency with respect to the health of their assets. The detailed knowledge about defects and their propagation over time is the most important prerequisite for preventive maintenance and repair, which are known to unlock great cost savings. In addition, it facilitates compliance with legislation and with requirements by insurance companies. For this reason, rotor blades and wind-turbine towers have to be inspected periodically.

Such inspections are carried out manually by rope access teams. Highly trained inspection climbers visually identify defects over a blade surface of up to 500m² and record anomalies with handheld cameras. Current issues with traditional rope access inspection include: an aging plant population, requiring frequent inspections, increasing size of the turbines, with blades longer than 60 meters and towers higher than 100 meters, the inspection quality depends on the subjective judgement of the climbers, adverse weather conditions may limit the inspector's performance, damages can be detected by the rope team but full coverage and seamless digital documentation of the blade's health cannot be assured, reports are created mostly manually.

Assuming that a set of images of a turbine blade can be obtained in a systematic fashion, the problem remains to systematically analyse these images and extract technically meaningful information in reliable manner. Preferably, this process should be automated to a large degree.

It is therefore an object of the invention to create a method for analysis of sensor data related to a wind turbine of the type mentioned initially, which overcomes the disadvantages mentioned above.

These objects are achieved by a method for analysis of sensor data related to a wind turbine according to the claims.

The method for analysis of sensor data related to a wind turbine comprises the steps of
- retrieving (from storage) a plurality of sets of enhanced sensor data, each comprising sensor data stored in association with sensor pose data that defines the pose of a sensor at the time at which the sensor data was acquired;
- processing the plurality of sets of sensor data in combination with the sensor pose data, thereby generating an integrated view on the sets of the enhanced sensor data.

The enhanced sensor data can be the result of an inspection mission which comprises an inspection pattern with settings or reference data for a UAV, for inspection sensors (such as a camera) and for sensors for navigation, and which defines positions of the UAV at which sensor readings (such as images) are to be taken, and/or areas or points to be inspected or photographed.

The sensor data, that is, each set of sensor data, is stored in combination with sensor metadata. This combination shall be called **enhanced sensor data.** The sensor data can in particular be image data. The sensor metadata can in particular comprise sensor pose data. Pose data describes the pose of an object in 3D space, that is the combination of its *position* and *orientation.* Further sensor metadata can describe parameters of the inspection sensor related to the captured sensor data. For example, if the sensor is a camera, the sensor metadata can be exposure time, focus settings, etc.

In embodiments, storing each set of sensor data in association with sensor pose data comprises the steps of, during an inspection mission:
- storing each set of sensor data - for example, an image - with a timestamp;
- storing, at each point in time that an image is captured, the sensor pose data with a timestamp.

Any further metadata can be stored in the same manner. The different data can be stored in association with a mission identifier that uniquely identifies the inspection mission and permits to link the data to mission data that characterises the mission as a whole, such as an identity of the turbine, a model type of the turbine, its geographic location, its owner or operator, etc...

The reference flight path can be in terms of the trajectory and pose of the UAV or the trajectory and pose of the inspection sensor. The two are related by their relative position and the gimbal angles.

In embodiments, the sensor is a camera and the sensor data is image data, and the step of
- processing the plurality of sets of sensor data in combination with the sensor pose data, thereby generating an integrated view on the sets of the enhanced sensor data comprises the step of
- displaying, on a display device, one or more images defined by the image data, and at least one of the following steps
- displaying for each of the images displayed, associated sensor pose data;
- displaying at least two images ordered according their associated sensor pose data.

In this manner, an image browser can be provided which allows for an integrated view of a plurality of images of the blade, in a manner that corresponds to the physical configuration of the inspection sensor or camera relative to the blade at the instant that the images were taken.

In embodiments, the step of
- displaying at least two images ordered according their associated sensor pose data;
comprises at least one of the steps of
- displaying at least two images in a horizontal row, the relative position of the images in the row being according to a relative horizontal position comprised in the respective sensor pose data associated with each image, wherein the images in the same horizontal row are associated with the same vertical position comprised in the respective sensor pose data;
- displaying at least two image in a vertical column, the relative position of the images in the column being according to a relative vertical position comprised in the respective sensor pose data associated with each image; wherein the images in the same vertical column are associated with the same horizontal position comprised in the respective sensor pose data.

It is understood, that images being "associated with the same vertical position" does not necessarily mean that the vertical positions are exactly the same, but can differ to a certain degree. Or it can mean that a vertical position comprised in the respective sensor pose data lies within a band of vertical positions of a given width. Thereby, it is possible to display views of the same blade taken at different horizontal positions around the blade and at least approximately at the same height in an integrated view, allowing a user to view part or the entire circumference of the blade along a chord line in an intuitively appealing manner in the horizontal sequence. The same holds, mutatis mutandi, for images "associated with the same horizontal position" at different heights along the span of the blade. Here the band of horizontal positions considered to encompass "the same" can be inclined, that is, not vertical, if the blade is also inclined in a projection a seen in the sequence of images.

In embodiments, the images associated with the same horizontal position are captured as a sequence of images as the UAV follows an essentially vertical section of its flight path.

In embodiments, the method comprises the step of displaying at least two images in a vertical column, and scrolling, according to a user input, the column in a vertical direction on the display device.

In embodiments, the method comprises the steps of
- displaying a magnified section of a first image of the at least two images in the vertical column, the magnified section showing part of the first image at a horizontal position and with a level of magnification, and
- scrolling, according to a user input, the magnified section,
- thereby, when the magnified section reaches an upper or lower boundary of the first image, changing the display to show a magnified section of an adjacent second image with the same level of magnification and located at the same horizontal position within the second image.

The horizontal position can be chosen to be the same in image coordinates. Alternatively, it can be chosen to be the same horizontal position on the blade, e.g. in a coordinate system of the blade (or "blade coordinates"), wherein the horizontal position can be defined and measured along the chord lines.

This allows to scroll the magnified section through a sequence of vertically arranged images, thereby presenting a quasi-continuous magnified view of portions of the blade.

In embodiments, the method comprises the steps of
- inputting a user selection specifying a selected linear feature of the blade;
- displaying a magnified section of a first image showing a portion of the selected linear feature;
- inputting a scroll command, and in response to the scroll command, moving the magnified section to follow the selected linear feature.

The selected linear feature can be, for example, the leading edge or trailing edge, a seam line or a weld line on the surface of the blade. Given the computer model of the blade, which also comprises such linear features, and since the images can be mapped onto the model, the position of a feature in the model can be projected back into the images and used to select the portion of the image to be displayed in the magnified section.

In embodiments, the sensor is a camera and the sensor data is image data, and the step of
- processing the plurality of sets of sensor data in combination with the sensor pose data, thereby generating an integrated view on the sets of the enhanced sensor data
comprises the steps of
- identifying, in images represented by the image data, one or more deviations on the blade;
- automatically determining, for each of the one or more deviations, a deviation location defining a location of the deviation on the blade;
- storing, for each of the one or more deviations, the deviation location as part of deviation data associated with the deviation.

The term "deviation" represents changes to the surface of a blade 3 that deviate from a normal or original state of the surface. Typically, a deviation is a defect, or a patch caused by repairing a defect. Generally speaking, deviations are caused by events that change the state of the surface. Such events can be damage events or repair or maintenance events.

Deviation data is a set of information describing a deviation. It can comprise one or more deviation images, a deviation categorization and a deviation location. A deviation image is a sub-image cut from an image along a bounding line, typically a bounding box. The deviation categorization comprises a type, severity, etc. of the deviation. It can also comprise an action recommendation, indicating a type of action for repairing a defect. The different data comprised by deviation data regarding a particular deviation or defect can be stored in association with a unique deviation identifier.

The deviation location generally corresponds to the location of the deviation in 3D space. It can be can expressed in terms of a 3D reference system external to the blade, or one fixed to the blade, or in terms of a two-dimensional blade coordinate system on the surface of the blade. Therein, for example, one coordinate can give the position as measured from the root of the blade, the other the position on a chord line, measured from one of the edges

In embodiments, the method comprises (for identifying deviations on the blade) the steps of
- presenting an image to a user;
- inputting a user input that specifies a deviation image that shows the deviation within the image, in particular wherein the user input specifies a bounding line, in particular a bounding box, delineating the deviation image from the remainder of the image;
- storing the deviation image as part of deviation data associated with the deviation; and optionally comprises (for determining a deviation location) the steps of
- computing the deviation location on the blade by determining, based on the bounding line, a location of the deviation image within the image, and projecting this location onto a computer model of the blade;
- storing the deviation location as part of deviation data associated with the deviation.

The user input can be inputted by means of a pointing device such as a computer mouse, and by drawing the bounding line or a bounding box at least approximately comprising the deviation image.

The bounding line can be determined automatically from a single point of the deviation image. This point can be selected by the user or can be determined automatically. The bounding line or box can be determined automatically, for example, by using a standard box size or by determining an image patch around the selected point that shares image properties such as colour and/or structure with the selected point.

If the user selects a single point, then this can be used as the location of the deviation image within the image.

This (determining a deviation location) can be done given the sensor pose data associated with the image and the 3D computer model of the blade. The sensor pose data allows to determine the relative position of the camera to the real blade at the time that the image was taken. The geometry of the camera is known, and can depend on settings of the camera, such as zoom and focus settings, which are part of the sensor metadata. This information allows to project, within the 3D computer model, a point in the image coordinate system back onto the 3D model of the blade and thereby determine the position on the blade.

The location of the deviation image within the image can be determined from the bounding line, for example, as the centre of gravity of the image section determined by the bounding line.

In embodiments, the method comprises (for identifying deviations on the blade) the steps of
- performing a computer-implemented analysis of an image to identify one or more deviation images showing deviations within the image;
- storing the deviation image as part of deviation data associated with the deviation; and optionally comprises (for determining a deviation location) the step of
- computing the deviation location on the blade by automatically determining a location of the deviation image within the image and projecting this location onto a computer model of the blade;
- storing the deviation location as part of deviation data associated with the deviation.

The step of automatically determining the location of the deviation image within the image can be part of the preceding computer-implemented analysis. For example, it can be an output of an analysis performed with a convolutional neural network (CNN) or another machine learning method. Alternatively, it can be determined by the steps of
- automatically determining a bounding line, in particular a bounding box, delineating the deviation image from the remainder of the image, and
- automatically determining, from the bounding line, the location of the deviation image within the image.

In embodiments, the method comprises the steps of
- automatically or manually determining, for each of the one or more deviations, a deviation categorization defining one or more properties of the deviation, comprising at least one of
   ∘ a type of the deviation,
   ∘ a severity of the deviation,
   ∘ an action recommendation for treating the deviation; and
- storing the deviation categorization as part of deviation data associated with the deviation.

A deviation categorization comprises properties of the deviation. Further elements of a deviation categorization can comprise other deviation properties such as a size of the deviation. This can be expressed in blade coordinates. It can comprise a maximum elongation in each of the two coordinate directions.

In embodiments, automatically determining the deviation categorization comprises the use of a classification method derived by supervised machine learning.

Methods for image classification based on training data can be applied. A training set of deviation images with associated deviation categorizations that were established manually can be used to train a classification algorithm that will perform the automatic classification based on fresh deviation images. Such algorithms can use, for example, convolutional neural networks (CNN).

In embodiments, the classification method can use as input, in addition to a deviation image, the associated deviation location. This allows to take into account the fact that certain defects are more likely to appear at certain locations on the blade. This can improve the efficiency and the quality of the classification. For example, defects due to lightning are more likely to occur near the tip, erosion is more likely to occur on the leading edge, cracks are more likely to occur at locations of high stress (which can be found by FEM simulation of the blade under load), etc.

In embodiments, the method comprises the steps of
- for two or more sets of deviation data (representing deviations that have been identified and located) representing deviations identified in different images, comparing their deviation locations on the blade, and,
- if the locations are the same, storing an association between the two sets of deviation data to represent the fact that they pertain to the same physical deviation.

In this manner, deviation images extracted from different images are matched, showing the same physical deviation from different viewpoints and/or at different points in time. The comparing of the deviation location can be done automatically. The different viewpoints typically correspond to images or generally enhanced sensor data captured during the same inspection mission inspecting a single blade. The different points in time typically correspond to separate inspection missions inspecting the same blade at different times, e.g., months or years apart.

In embodiments, the method comprises the step of
- outputting, in human readable form, a report concerning at least one blade or the set of blades of a turbine, the report comprising: a list of deviations, and for each deviation at least
   ∘ a deviation image,
   ∘ a deviation categorization and a
   ∘ deviation location, and
   ∘ optionally more than one deviation image if there exists more than one deviation image for the same physical deviation.

Based on such reports, a turbine operator can demonstrate compliance with legal and insurance companies' requirements. Generally, technical requirements can be specified to ensure safe and efficient operation of the turbine. Showing that a turbine or blade satisfies the requirements can help to extend the lifetime of the blade and/or the turbine.

In embodiments, the method comprises the steps of
- maintaining a database that comprises, for at least one blade, deviation data, and in particular also enhanced sensor data, from a plurality of inspection missions, wherein associations between sets of deviation data from different inspections are present, representing the fact that they pertain to the same physical deviation observed at different points in time;
- optionally performing an analysis of a progression over time of defects represented by the deviation data from a plurality of inspection missions over a plurality of turbines, thereby determining a statistical model of defect progression, and using this statistical model to predict, for a selected blade, defect progression and optionally plan maintenance actions on the blade.

Such sets of deviation data from different inspections but pertaining to the same physical deviation can be called deviation history data. For a deviation that represents a defect that has not been repaired, it can also be called defect history data.

Deviation history data can be augmented by information about repairs having taken place. Such information can be added manually. As a result, the deviation history data covers, for each deviation, its initial evolution as a defect, then a maintenance action such as repairing the defect, and then the further evolution of the repaired deviation, all at the same location on the blade.

In embodiments, images from at least one earlier inspection mission are used in performing a computer-implemented analysis of an image to identify one or more deviation images, by comparing an image to an image of the same location on the blade from an earlier inspection mission. This makes it possible to identify deviations based on a difference in images, and/or to identify changes to a deviation over time.

In embodiments, from the deviation history data and in particular defect history data from a plurality of inspection missions over a plurality of turbines having comparable types of blades, an analysis of defect progression over time is performed. For example, a statistical model of the evolution of deviation properties as comprised in the deviation categorization can be automatically derived. This corresponds to a model of defect progression for the type of blades considered. From such a model of defect progression, prediction of defect progression can be performed and maintenance can be planned. Based on this, maintenance actions can be performed. Depending on the type and severity of all the defects on a blade, maintenance can involve local repairs or a general overhauling or replacement of the blade.

In embodiments, the sensor is a distance sensor and the sensor data is distance data, and the step of
- processing the plurality of sets of sensor data in combination with the sensor pose data, thereby generating an integrated view on the sets of the enhanced sensor data is accomplished by the step of
- from multiple sets of distance measurements made by the distance sensor, combined with sensor pose data representing the pose of the distance sensor when each set of distance measurements was obtained, determining a 3D model of the turbine.

A set of distance measurements can, depending on the type of sensor, comprise a 2D depth map or a linear sequence of distance measurements from scanning distances within a plane. In each case, such a set of distance measurements is associated with the pose of the distance sensor - which in turn can be determined from the pose of the UAV and the angles of the gimbal - at the time that the measurements were taken. This information can be combined, resulting in, for each set of distance measurements, a set of points in 3D space. For a linear scanner, these points lie within a plane in 3D space. A plurality of such sets of distance measurements can give, depending on the flight path and pose of the distance sensor, points in 3D space from all parts of the turbine that are of interest. The information from these points, representing a point cloud, can be integrated in known ways to generate a 3D model from scratch, or to adapt parameters of a given 3D model.

Methods for generating 3D models from scratch, given a set of data points corresponding to a point cloud are known.

Methods for adapting parameters of a given 3D model to a point cloud can involve optimisation methods that vary the parameters of the 3D model until it achieves an optimal match with the point cloud. Optimisation methods can be deterministic or stochastic. Adapting a given model has the advantage that a priori information about the structure of the turbine is incorporated.

This solves the problem that up to date 3D models of blades and the entire turbine may not be available to the operators of the turbine. In embodiments, given an exact model of the blades, simulations of the mechanical and/or the aerodynamic behaviour properties of a turbine can be performed, and based on this, operation of the turbine can be optimised.

Furthermore, such data can be valuable in the life time assessment of the blade. Using a full 3D model, which currently is not available to the operator, enables calculation of the forces and stresses on the blade caused in operation of the turbine and can then be provided to, e.g., insurance companies when requesting extension of the operation.

In embodiments, the method comprises the following steps for acquiring sensor data related to a wind turbine, using an unmanned aerial vehicle (UAV) comprising at least one inspection sensor for acquiring the sensor data:
- determining a reference flight path for the UAV;
- operating the UAV to automatically fly along an actual flight path derived from the reference flight path,
- acquiring, as the UAV flies along one or more sections of the actual flight path, with the inspection sensor, multiple sets of sensor data,
- storing each set of sensor data in association with sensor pose data that defines the pose of the inspection sensor at the time at which the set of sensor data was acquired.

In an embodiment, a computer program for the analysis of sensor data related to a wind turbine is loadable into an internal memory of a digital computer or a computer system, and comprises computer-executable instructions to cause one or more processors of the computer or computer system execute the analysis method. In another embodiment, a computer program product comprises a computer readable medium having the computer-executable instructions recorded thereon. The computer readable medium preferably is non-transitory; that is, tangible. In still another embodiment, the computer program is embodied as a reproducible computer-readable signal, and thus can be transmitted in the form of such a signal. The executing of the method can involve the computer program interacting with a user, by means of output devices such as a display, printer, etc. and input devices such as a keyboard, pointing device, touchscreen, etc.

Further embodiments are evident from the dependent patent claims.

The subject matter of the invention will be explained in more detail in the following text with reference to exemplary embodiments which are illustrated in the attached drawings, in which:
- Figure 1: a wind turbine and a reference flight path;
- Figure 2: a UAV;
- Figure 3: enhanced sensor data captured by the UAV;
- Figure 4: enhanced sensor data displayed on a display device;
- Figure 5: elements of an image;
- Figure 6: a blade and blade coordinate system; and
- Figure 7: deviation data.

In principle, identical parts are provided with the same reference symbols in the figures.

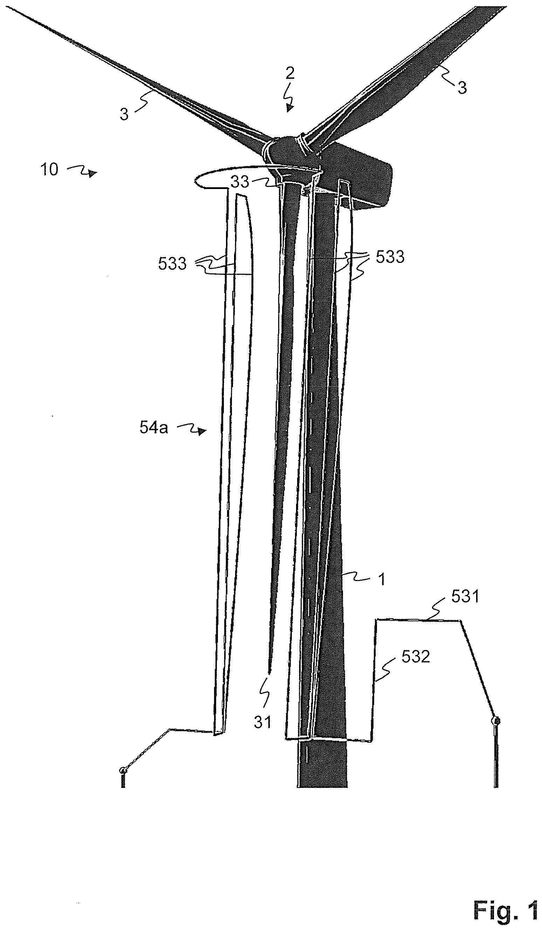

Figure 1 schematically shows a wind turbine 10 comprising a tower 1 supporting a nacelle enclosing a drive train driving an electrical generator via a gearbox. Turbine blades 3 are arranged on a hub to form a rotor 2 driving the drive train.

Each blade 3 is typically secured at its root end 32, and then "spans" radially "outboard" to a free end or tip 31. The distance from the tip 31 to the root 32, at the opposite end of the blade 3, is called the "span." The front, or leading edge 33 of the blade 3 connects the forward-most points of the blade 3 that first contact the air. The rear, or trailing edge 34 of the blade 3 is where airflow that has been separated by the leading edge 33 re-joins after passing over a suction surface or side 35 and a pressure surface or side 36 of the blade.

A "chord line" connects the leading and trailing edges of the blade 3 in the direction of the typical airflow across the blade. The length of the chord line is called the chord. Since many blades 10 change their chord over the span, the chord length is referred to as the "root chord," near the root, and the "tip chord," near the tip of the blade. The chord lines are arranged in the "chord planes" that extend through the streamlines on the corresponding pressure and suction surfaces of the blade.

**Figure 1** also shows a reference flight path 54a. The reference flight path 54a can be generated from a generic flight path 53 by scaling it according to the actual dimensions, expressed by a set of parameters, of the turbine 10 to be inspected.

The flight path shows several sections 533 along which the UAV 4 moves along the span of the blade 3 on vertical paths, upward or downward. Each such vertical section covers the span of the blade 3, and thus images taken along one section cover one circumferential section of the blade. The vertical sections are arranged around the blade 3, and so the images 6 from all vertical sections together can provide a complete view of the surface of the blade 3.

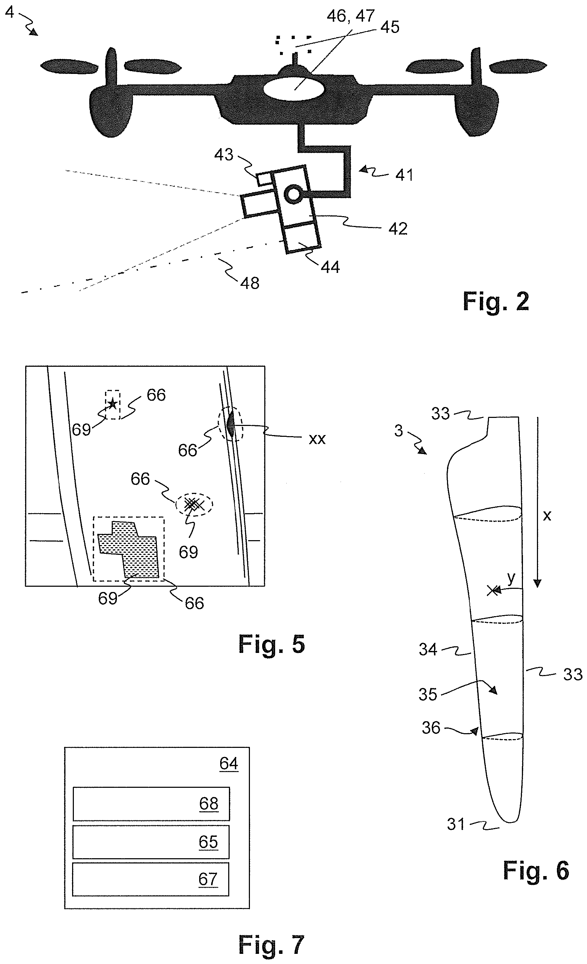

**Figure 2** schematically shows an unmanned aerial vehicle (UAV) 4, such as a multicopter, as it can be used in embodiments of the invention. It carries a inspection sensor 42 suspended by gimbal 41, rotatable about at least two or three Euler angles. The inspection sensor 42 typically is an optical camera and shall henceforth be referred to as such. However, other types of inspection sensors can be envisioned, such as devices operating in the non-optical ranges of the electromagnetic spectrum, range sensors etc. The camera 42 comprises a focus drive 43 for changing a focus setting of the camera lens.

Attached and moved with the inspection sensor (camera) 42 is a distance sensor 44. In other embodiments, the distance sensor 44 is attached to and moved with a main body of the UAV 4 and not the gimbal 41. The distance sensor 44 can be able to generate a 2D depth map or a linear sequence of distance measurements from scanning distances within a scanning plane 48. Most exemplary embodiments described herein will be based on the latter. A 2D depth map comprises 3D information in that it comprises a 2D array of data, wherein the data indicates the distance from a point (such as a sensor) or in general also from a plane.

The UAV 4 comprises a GPS 45 module and/or a further sensor 46, such as inertial sensor, gyroscope, barometer and/or compass. A flight controller 47 is arranged to integrate data from the GPS 45 and/or further sensor 46 and the distance sensor 44, and a computer model of an object to be inspected, such as a wind turbine 10, and to generate flight commands such as position or speed vectors to be executed by the UAV 4. This can be done by, at a given time and location, determining the pose of the UAV 4, comparing it to the pose according to the reference path, and calculating flight commands based on current pose, velocity and acceleration information to move the UAV to a next pose along the reference path at a future point in time. The reference path and the next pose typically includes reference speed vectors.

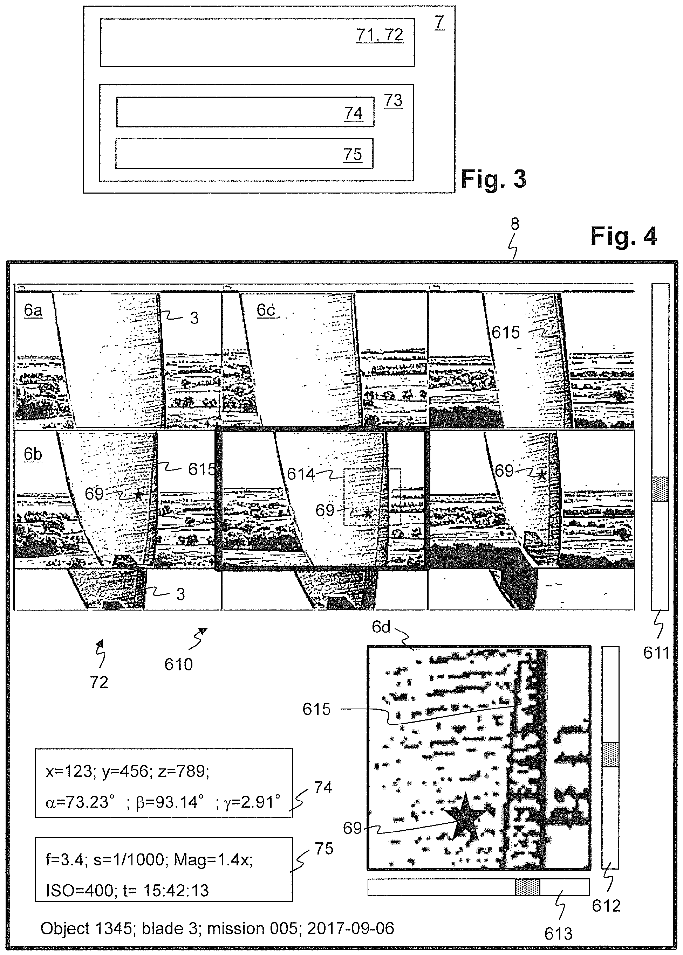

**Figure 3** illustrates a sequence of sensor data 71, in this case a sequence of images or image data 72 and its relation to other data. The image data 72 are captured at regular spatial intervals as the UAV 4 moves along the blade 3, along essentially vertical sections of the actual flight path 54b, going up or down. Each image is stored as a set of enhanced sensor data 7, comprising the sensor data 71, in this case image data 72, together with sensor metadata 73. The sensor metadata 73 comprises sensor pose data 74 representing the pose of the camera 42 when the image was captured, and further metadata 75, typically generated by the camera 42. The enhanced sensor data 7 can be associated with a mission identifier, e.g. a string of characters, that uniquely identifies the inspection mission.

For a typical inspection mission covering one blade, with a resolution of ca. five Pixels per millimetre and with 30 MPixel per image, the image data 72 can use ca. 12 GB of computer storage.

**Figure 4** shows the sequence of images 6 presented on a display device 8, arranged in a grid 610, with rows comprising images 6a, 6c taken at essentially the same height (along the span of the blade 3, assuming that the blade 3 is in a vertical position, pointing downward). Columns comprise images 6a, 6b of the same vertical section of the blade 3. In embodiments, there are one or more rows, and one or more columns. A vertical grid scroll element 611 is configured to, according to user input, scroll the one or more columns of the grid 610 vertically. In the Figure, the vertical scroll position is such that the lowermost row, showing the tip from different angles, is only partly displayed. A horizontal scroll element (not shown in the figure) can be present as well.

The images 6a, 6b, 6c show the blade 3 in front of a landscape, and on some images a deviation 69 being a defect is visible. In the present example, the deviations 69 or defects seen in the three images in the middle row all correspond to the same physical defect. In the lowermost row, the dark region corresponds to a patch created when the blade 3 was repaired.

For a user-selected image 6, indicated by a thick border, sensor pose data 74 and further sensor metadata 75 associated with the image is displayed. Further information such as sensor metadata 73 pertaining to all the images can also be shown on the display 8 in association with the images 6.

The user interface allows a user to select one of the images 6a, 6b, 6c for a magnified view, which is displayed as a magnified section 6d of the selected image. A zoom level or factor of magnification can be set by the user. The example shows a section of the image labelled 6c being magnified. The part in this "un-zoomed" image 6c that is being magnified is identified by a zoom frame 614. The magnified view comprises a vertical scroll element 612 and horizontal scroll element 613. Scrolling with these scroll elements moves the section of the image being magnified, which can be indicated by moving the zoom frame 614 within the un-zoomed image. When the zoom frame reaches the border of a first un-zoomed image, the system can be configured to move the zoom frame to an adjacent, second image in the vertical or horizontal direction, depending on which border has been reached. The zoom frame can further be positioned at a location in the adjacent, second image that shows a physical location on the blade 3 is at or nearest to the physical location shown in the magnified section 6d in the previous, first image 6c. The physical location of image points or sections in each case can be computed by projecting these points, in a 3D model of the blade 3, back onto the modelled blade surface, as explained elsewhere in the present application.

In embodiments, the zoom frame can be placed in the adjacent, second image at the same vertical or horizontal position, depending on whether a horizontal or vertical border of the images 6 was crossed, at which it was in the first image 6c.

In other embodiments, the zoom frame 614 can be made to follow a selected linear feature 615. This linear feature 615 can be defined in the 3D model. It can be a curve on the surface of the blade. Given a point on the linear feature 615, an image 6 comprising this point is automatically determined from its location in the 3D model and the image data 72 with associated sensor pose data 74, and displayed at a selected zoom level as a magnified section 6d. Operating a further scroll controller moves the point to be displayed along the linear feature 615 and updates the magnified section 6d.

Such linear features can be the leading edge 33 or trailing edge 34, or a seam line 615.

The images 6 in the middle row in the grid 610 and the magnified view 6d all show the same deviation, in this case a defect. The defect can be identified independently in each image 6, and based on the location of the defect on the blade, associated deviation data sets can be linked, indicating that they refer to the same physical defect.

**Figure 5** shows elements of an image 6, comprising a view of a blade 3, bounded by an image frame 61, with exemplary deviations 69. In the present example, three of the deviations 69 represent defects, and one represents a patch on the surface caused by repairing a former defect. Each deviation 69 is associated with a bounding line 66, which can be a bounding box, another regular form such as an ellipse, or a freeform. A bounding line 66 can be drawn by a user or determined automatically by image analysis software. For each deviation 69 a deviation image 65 showing only a part of the image 6 comprising part or all of the deviation 69 is extracted. For example, if the bounding line 66 is a bounding box, the deviation image 65 can be the part of the image 6 contained by the bounding box.

**Figure 6** shows a blade 3 and blade coordinate system. The blade coordinate system has a span coordinate x and a chord coordinate y. In the present example, the span coordinate has its origin at the root 32 of the blade 3, and the chord coordinate at the leading edge 33. Points on the suction side 35 and pressure side 36 can be distinguished in chord coordinates by assigning them positive or negative values, respectively.

**Figure 7** shows deviation data 64 comprising
- a deviation image 65, that is, image data;
- deviation categorization 67, such as
   ∘ type, for example: Erosion, Grease or Oil, Cracking, Lightning damage, Delamination. Repaired Area
   ∘ severity, for example: Small nonconformity, Medium nonconformity, Severe nonconformity
   ∘ action recommendation, for example: No action required, Immediate repair required, Continued monitoring required, Decommissioning required; and
- deviation location 68, such as x=10135, y=250, indicating the location in millimetres in the blade coordinate system.

While the invention has been described in present embodiments, it is distinctly understood that the invention is not limited thereto, but may be otherwise variously embodied and practised within the scope of the claims.

## Claims

1. Method for analysis of sensor data related to a wind turbine, comprising the steps of
• retrieving a plurality of sets of enhanced sensor data (7), each comprising sensor data (71) stored in association with sensor pose data (74) that defines the pose of a sensor (42, 44) at the time at which the sensor data (71) was acquired;
• processing the plurality of sets of sensor data (71) in combination with the sensor pose data (74), thereby generating an integrated view on the sets of the enhanced sensor data (7).

2. The method of claim 1, wherein the sensor is a camera (42) and the sensor data (71) is image data (72), and wherein the step of
• processing the plurality of sets of sensor data (71) in combination with the sensor pose data (74), thereby generating an integrated view on the sets of the enhanced sensor data (7)
comprises the step of
• displaying, on a display device (8), one or more images (6) defined by the image data (72),
and at least one of the following steps
• displaying for each of the images (6) displayed, associated sensor pose data (74);
• displaying at least two images (6) ordered according to their associated sensor pose data (74).

3. The method of claim 2, wherein the step of
• displaying at least two images (6) ordered according their associated sensor pose data (74);
comprises at least one of the steps of
• displaying at least two images (6a, 6c) in a horizontal row, the relative position of the images (6a, 6c) in the row being according to a relative horizontal position comprised in the respective sensor pose data (74) associated with each image (6a, 6c), wherein the images (6a, 6c) in the same horizontal row are associated with the same vertical position comprised in the respective sensor pose data (74);
• displaying at least two images (6a, 6b) in a vertical column, the relative position of the images (6a, 6b) in the column being according to a relative vertical position comprised in the respective sensor pose data (74) associated with each image (6a, 6b); wherein the images (6a, 6b) in the same vertical column are associated with the same horizontal position comprised in the respective sensor pose data (74).

4. The method of claim 3, comprising the step of displaying at least two images (6a, 6b) in a vertical column, and scrolling, according to a user input, the column in a vertical direction on the display device (8).

5. The method of claim 4, comprising the steps of
• displaying a magnified section (6d) of a first image (6a) of the at least two images (6a, 6b) in the vertical column, the magnified section (6d) showing part of the first image (6a) at a horizontal position and with a level of magnification, and
• scrolling, according to a user input, the magnified section,
• thereby, when the magnified section (6d) reaches an upper or lower boundary of the first image (6a), changing the display to show a magnified section (6d) of an adjacent second image (6b) with the same level of magnification and located at the same horizontal position within the second image (6b).

6. The method of one of claims 2 to 4, comprising the steps of
• inputting a user selection specifying a selected linear feature of the blade (3);
• displaying a magnified section (6d) of a first image (6a) showing a portion of the selected linear feature;
• inputting a scroll command, and in response to the scroll command, moving the magnified section (6d) to follow the selected linear feature.

7. The method of one of claims 1 to 6, wherein the sensor is a camera (42) and the sensor data (71) is image data (72), and wherein the step of
• processing the plurality of sets of sensor data (71) in combination with the sensor pose data (74), thereby generating an integrated view on the sets of the enhanced sensor data (7)
comprises the steps of
• identifying, in images (6) represented by the image data (72), one or more deviations (69) on the blade (3);
• automatically determining, for each of the one or more deviations (69), a deviation location (68) defining a location of the deviation (69) on the blade (3);
• storing, for each of the one or more deviations (69), the deviation location (68) as part of deviation data (64) associated with the deviation (69).

8. The method of claim 7, comprising the steps of
• presenting an image (6) to a user;
• inputting a user input that specifies a deviation image (65) that shows the deviation (69) within the image (6), in particular wherein the user input specifies a bounding line (66), in particular a bounding box, delineating the deviation image (65) from the remainder of the image (6);
• storing the deviation image (65) as part of deviation data associated with the deviation (69);
and optionally comprising the steps of
• computing the deviation location (68) on the blade by determining, based on the bounding line (66), a location of the deviation image (65) within the image (6) and projecting this location onto a computer model of the blade (3);
• storing the deviation location (68) as part of deviation data associated with the deviation (69).

9. The method of claim 7, comprising the steps of
• performing a computer-implemented analysis of an image (6) to identify one or more deviation images (65) showing deviations (69) within the image (6);
• storing the deviation image (65) as part of deviation data associated with the deviation (69);
and optionally comprising the step of
• computing the deviation location (68) on the blade by automatically determining a location of the deviation image (65) within the image (6) and projecting this location onto a computer model of the blade (3);
• storing the deviation location (68) as part of deviation data associated with the deviation (69).

10. The method of one of claims 7 to 9, comprising the steps of
• automatically or manually determining, for each of the one or more deviations (69), a deviation categorization (67) defining one or more properties of the deviation (69), comprising at least one of
∘ a type of the deviation (69),
∘ a severity of the deviation (69),
∘ an action recommendation for treating the deviation (69); and
• storing the deviation categorization (67) as part of deviation data associated with the deviation (69).

11. The method of claim 10, wherein automatically determining the deviation categorization (67) comprises the use of a classification method derived by supervised machine learning.

12. The method of one of claims 7 to 11, comprising the steps of
• for two or more sets of deviation data (64) representing deviations (69) identified in different images, comparing their deviation locations (68) on the blade (3), and,
• if the locations are the same, storing an association between the two sets of deviation data (64) to represent the fact that they pertain to the same physical deviation (69).

13. The method of one of claims 7 to 12, comprising the step of
• outputting, in human readable form, a report concerning at least one blade (3) or the set of blades (3) of a turbine (10), the report comprising: a list of deviations (69), and for each deviation (69) at least
∘ a deviation image (65),
∘ a deviation categorization (67) and a
∘ deviation location (68), and
∘ optionally more than one deviation image (65) if there exists more than one deviation image (65) for the same physical deviation (69).

14. The method of one of claims 7 to 12, comprising the steps of
• maintaining a database that comprises, for at least one blade (3), deviation data (64), and in particular also enhanced sensor data (7), from a plurality of inspection missions, wherein associations between sets of deviation data (64) from different inspections are present, representing the fact that they pertain to the same physical deviation (69) observed at different points in time;
• optionally performing an analysis of a progression over time of defects represented by the deviation data (64) from a plurality of inspection missions over a plurality of turbines (10), thereby determining a statistical model of defect progression, and using this statistical model to predict, for a selected blade (3), defect progression and optionally plan maintenance actions on the blade (3).

15. The method of claim 1, wherein the sensor is a distance sensor (44) and the sensor data (71) is distance data, and wherein the step of
• processing the plurality of sets of sensor data (71) in combination with the sensor pose data (74), thereby generating an integrated view on the sets of the enhanced sensor data (7)
is accomplished by the step of
• from multiple sets of distance measurements made by the distance sensor (44), combined with sensor pose data (74) representing the pose of the distance sensor (44) when each set of distance measurements was obtained, determining a (3D) model of the turbine (10).
